(19) Europäisches Patentamt / European Patent Office / Office européen des brevets

(11) **EP 1 805 435 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(21) Anmeldenummer: 05774247.0

(22) Anmeldetag: **14.07.2005**

(51) Int Cl.:
*F16H 61/32* (2006.01)     *H02K 37/04* (2006.01)

(86) Internationale Anmeldenummer:
**PCT/EP2005/007648**

(87) Internationale Veröffentlichungsnummer:
**WO 2006/024344 (09.03.2006 Gazette 2006/10)**

(54) **WÄHLANTRIEB FÜR AUTOMATISIERTE SCHALTGETRIEBE VON KRAFTFAHRZEUGEN**

SELECTOR DRIVE FOR AUTOMATED TRANSMISSIONS OF MOTOR VEHICLES

ENTRAINEMENT SELECTEUR POUR DES BOITES DE VITESSES SEMI-AUTOMATIQUES DE VEHICULES AUTOMOBILES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.08.2004 DE 102004041753**

(43) Veröffentlichungstag der Anmeldung:
**11.07.2007 Patentblatt 2007/28**

(73) Patentinhaber: **ZF Friedrichshafen AG
88038 Friedrichshafen (DE)**

(72) Erfinder:
• **KETTELER, Karl-Hermann
88677 Markdorf (DE)**
• **FUESSL, Andreas
88079 Kressbronn (DE)**
• **SCHEPPERLE, Bernd
78464 Konstanz (DE)**

(56) Entgegenhaltungen:
| | |
|---|---|
| EP-A- 0 603 071 | EP-A- 0 771 066 |
| EP-A- 0 864 782 | EP-A- 0 898 099 |
| DE-A1- 4 230 326 | US-A- 4 595 865 |
| US-A- 4 777 419 | US-A- 5 150 629 |
| US-A- 5 291 115 | US-A- 5 929 590 |

**Beschreibung**

Die vorliegende Erfindung betrifft einen Wählantrieb für automatisierte Schaltgetriebe von Kraftfahrzeugen gemäß dem Oberbegriff des Patentanspruchs 1. Des weiteren bezieht sich die Erfindung auf ein Verfahren zum Wählen einer Wählposition in der Schaltanlage ei-nes automatisierten Schaltgetriebes eines Kraftfahr-zeugs.

Die Automatisierung der Getriebefunktionen gewinnt zunehmend an Bedeutung; automatisierte Schaltgetriebe, die eine derartige Automatisierung aufweisen, weisen den Vorteil auf, dass der Fahrer vom Gangwechsel im Fahrzeug entlastet wird. Es wird dadurch insgesamt ein komfortabler und sicherer Betrieb ermöglicht. Des weiteren weisen automatisierte Schaltgetriebe signifikante Kostenvorteile auf. Hierbei wird bei der Kupplungsbetätigung nach dem Stand der Technik durch einen entsprechenden elektromechanischen Aktuator eine Translationsbewegung üblicherweise auf das Ausrücklager der Kupplung übertragen. Ähnliche Konstruktionen werden auch zur Schaltungsautomatisierung verwendet, wobei zum Wählen und Schalten zwei kinematisch unabhängige Bewegungen notwendig sind, die nach dem Stand der Technik üblicherweise von elektromechanischen Getriebestellern durchgeführt werden.

Elektromechanische Aktuatoren werden auch zum Umschalten zwischen Zweiradantrieb und Vierradantrieb für teilweise vierradgetriebene Fahrzeuge verwendet. Beispielsweise ist aus der DE 42 30 326 A1 eine elektronische Schaltvorrichtung für Fahrzeuggetriebe bekannt, bei der ein Vorgelege für einen Vierradantrieb zwei separate elektronische Betätigungseinrichtungen, nämlich eine Bereichsbetätigungseinrichtung und eine Kupplungs-Betätigungseinrichtung aufweist. Hierbei dient eine Bereichsbetätigungseinrichtung dazu, das Vorgelege zwischen einem oberen Bereich, einer neutralen Position und einem unteren Bereich zu schalten; die Kupplungs-Betätigungseinrichtung steuert den Eingriff einer Kupplung zwischen Zweiradantrieb, Antriebsautomatik und Vierradantrieb. Gemäß der DE 42 30 326 A1 umfasst die Bereichsbetätigungseinrichtung einen Elektromotor, der koaxial relativ zu einer Ausgangswelle des Vorgeleges eingebaut ist sowie eine lineare Schraube, um die Drehbewegung der Motorwelle selektiv in eine Axialbewegung der Bereichs-Schaltmuffe umzuformen.

Der elektrische Antrieb für die Wählfunktion bei einem automatisierten Schaltgetriebe wird üblicherweise mit einem Bürstenmotor realisiert. Hierbei wird die Drehbewegung des Bürstenmotors mit einem Getriebe (Spindel, Schnecke, Zahnstange) in eine Translationsbewegung umgesetzt, welche direkt zur Schaltgassenwahl führt; es ist auch möglich, dass über die Translationsbewegung eine Kulisse zur Vorwahl eines bestimmten Weges für die Schalthandlung betätigt wird.

Die Wählbewegung ist eine Bewegung mit wenig Kraftbedarf, wobei lediglich Reib- und Trägheitsmomente innerhalb der Schaltanlage zu überwinden sind, so dass sich die aus dem Stand der Technik bekannte Umsetzung der motorischen Drehbewegung in eine Translationsbewegung für diesen Zweck als vergleichsweise aufwändig erweist.

Des weiteren sind die Anforderungen an die Positionierung in der jeweiligen Schaltgasse je nach Ausführung und Anzahl der Schaltgassen recht hoch und fordern eine ausreichende Auflösung des verwendeten Gebers sowie einen genauen Algorithmus zur Positionierung. Die üblicherweise hoch gewählte Übersetzung zwischen motorischer Drehbewegung und Translationsbewegung hat das Ziel, die Anforderung an die Auflösung eines Bewegungssensors technisch realisierbar zu halten; die Realisierung der hohen Übersetzung ist in nachteiliger Weise mit hohem konstruktiven Aufwand verbunden.

In der gattungsbildenden EP-A- 864782 ist ein Wählantrierb und ein Verfahren zum Wählen einer Wählposition offenbart, wobei zum Wählen ein Schrittmotor benutzt wird.

Der vorliegenden Erfindung liegt die Aufgabe zugrunde, einen Wählantrieb für automatisierte Schaltgetriebe von Kraftfahrzeugen anzugeben, welcher die Nachteile des Standes der Technik vermeidet. Insbesondere soll eine einfache Positionierung ermöglicht werden und der konstruktive Aufwand reduziert werden. Zudem soll ein Verfahren zum Wählen einer Wählposition in der Schaltanlage eines automatisierten Schaltgetriebes eines Kraftfahrzeugs angegeben werden, was insbesondere zum Betreiben des erfindungsgemäßen Wählantriebs geeignet ist.

Diese Aufgabe wird für einen Wählantrieb durch die Merkmale des Patentanspruchs 1 gelöst. Ein Verfahren zum Wählen einer Wählposition in der Schaltanlage eines automatisierten Schaltgetriebes ist Gegenstand des Patentanspruchs 9. Weitere erfindungsgemäße Ausgestaltungen und Vorteile gehen aus den entsprechenden Unteransprüchen hervor.

Demnach wird vorgeschlagen, zur Realisierung der Wählfunktion bei automatisierten Schaltgetrieben einen geschalteten Reluktanzmotor (SRM) einzusetzen, wodurch die Herstellungskosten weiter gesenkt werden können. Der Reluktanzmotor wird im Getriebeöl betrieben, mit dem Vorteil, dass das Einschwingverhalten in die Zielposition durch die visköse Dämpfung durch das Öl positiv beeinflußt wird.

Durch festgelegte geometrische Bedingungen bzw. Abstände zwischen den Wählpositionen in der Schaltanlage kann die notwendige Schrittzahl nach Maßgabe des Einzelschrittwinkels des Elektromotors und des Abstandes zwischen den Wählpositionen festgelegt werden. Nach dem Wählvorgang ist nur noch eine Rückmeldung erforderlich, mit der das Erreichen der Sollposition überprüft werden kann. In vorteilhafter Weise werden Elektromotoren eingesetzt, welche die eigene Position ohne weiteren Aufwand an eine Sensorik bzw. Steuerung zurückmelden können, so dass der konstruktive Aufwand weiter reduziert wird.

Durch die erfindungsgemäße Konzeption wird die Positionierung durch die physikalischen Eigenschaften des Motors mit definierter Schrittweite realisiert, wodurch eine aufwendige diskrete Lageerkennung nicht mehr benötigt wird. Um dies zu realisieren, müssen bestimmte Bedingungen für die Abstände zwischen den Wählpositionen erfüllt werden.

Im Rahmen einer besonders vorteilhaften Ausführungsform der Erfindung wird vorgeschlagen, die Abstände zwischen den Wählpositionen derart zu gestalten, dass diese durch einen größten gemeinsamen Teiler (ggT ≥ 1) geteilt werden können. Ein Sonderfall dieser Ausgestaltung besteht darin, dass die Wählpositionen äquidistant angeordnet sind; hierbei wird mit einer 1:1 Zuordnung von Positionen des Elektromotors und Wählpositionen in der Schaltanlage eine weitere Vereinfachung der Ansteuerung erzielt.

Erfindungsgemäß wird zum Wählen eine elektromotorische Drehbewegung erzeugt, die in festen, physikalisch definierten und genau reproduzierbaren Schritten erfolgt, wobei sich die notwendige Schrittzahl aus dem größten gemeinsamen Teiler ggT der Abstände zwischen den Wählpositionen ergibt. Die Schrittzahl ist ein ganzzahliges Vielfaches des größten gemeinsamen Teilers.

Aufgrund der prinzipbedingten Rotationssymmetrie von elektrischen Motoren eignen sich zum Erzeugen der benötigten elektromotorischen Drehbewegung insbesondere Schrittmotoren und geschaltete Reluktanzmotoren.

Die Erfindung wird im Folgenden anhand der beigefügten Figur, welche eine schematische Schnittansicht eines geschalteten Reluktanzmotors darstellt, beispielhaft näher erläutert.

In der Figur ist eine Schnittansicht eines geschalteten Reluktanzmotors 1 gezeigt; der Motor umfasst einen Stator 2, umfassend Pole 3 und einen als Abtrieb dienenden Rotor 4, der Zähne 5 aufweist. In der Figur weist der Stator sechs Pole und der Rotor vier Zähne auf. Die schrittweise Bewegung des Rotors wird durch eine umlaufende Bestromung der Spulen, die in den Statorpolen enthalten sind, erreicht.

Durch die Wahl der Polzahl im Rotor P2 und die Nutzahl des Stators N1 kann der Einzelschrittwinkel φ eines geschalteten Reluktanzmotors durch das kleinste gemeinsame Vielfache (kgV) von N1 und P2 gemäß folgender Gleichung bestimmt werden:

$$\varphi = \frac{360}{kgV(N1,P2)}$$

Wenn eine Phase bzw. ein Pol des Stators des geschalteten Reluktanzmotors dauerhaft von Strom durchflossen ist, stellt sich der Rotor in eine definierte Lage ein und hat näherungsweise das Verhalten einer Drehfeder. Diese Lage, die mittels der mechanischen Übertragungskette an die Schaltanlage übertragen wird, entspricht gemäß der Erfindung einer gewünschten Wählposition der Schaltanlage.

Das physikalische Prinzip des Reluktanzmotors basiert auf der Beziehung: $T = \frac{1}{2}I^2 * \frac{dL}{d\alpha}$,

wobei L die Selbstinduktivität der stromführenden Spule, α der Drehwinkel des Rotors, I der Strom und T das erzielbare Drehmoment ist.

Das Motormoment entsteht also dadurch, dass sich die Selbstinduktivität der stromführenden Spule mit dem Drehwinkel des Rotors ändert. Der Drehmomentnulldurchgang befindet sich jeweils in den Positionen der maximalen und der minimalen Induktivität, so dass sich in der Zielposition die maximale Induktivität ergibt.

Der Spulenwiderstand bleibt konstant. Daraus ergibt sich, dass sich die elektrische Zeitkonstante jeder Spule mit dem Drehwinkel des Rotors ändert.

Der Maximalwert dieser Zeitkonstante wird jeweils in der Zielposition, d.h. nach der erforderlichen Anzahl von Schritten, erreicht. Demnach wird erfindungsgemäß vorgeschlagen, zur Lagebestimmung die Selbst-Induktivität der Statorspulen zu messen. Das kann z. B. durch den Stromanstieg oder Stromabfall in der Zielspule erfolgen; auf diese Weise lässt sich durch Messung der Stromanstiegs- oder Stromabfallzeit feststellen, ob sich der Rotor in der erwarteten Zielposition befindet.

Beispielsweise kann der Strom nach dem Abschalten der treibenden Spannungsquelle im Freilaufkreis nach ca. 30 % - 100 % der elektrischen Zeitkonstante gemessen und mit einem vorher bestimmten erwarteten Wert verglichen werden. Wird der erwartete Wert erreicht, dann ist die Zielposition erreicht; wird der erwartete Wert nicht erreicht, ist die Zielposition noch nicht erreicht. Um Temperaturänderungen des Motors zu berücksichtigen, errechnet sich der erwartete Wert des Stromes in Abhängigkeit von der Motortemperatur. Die Motortemperatur errechnet sich wiederum über die Ermittlung des Widerstands der Spule.

Wenn sich aufgrund der konstruktiven Gegebenheiten der Schaltanlage keine äquidistante Verteilung der Wählpositionen ergibt, sondern eine Verteilung, bei der die Abstände zwischen den Wählpositionen derart gestaltet sind, dass diese durch einen größten gemeinsamen Teiler (ggT>1) geteilt werden können, oder wenn beispielsweise zwischen dem Elektromotor und der Schaltanlage eine Übersetzungsstufe vorgesehen ist, so dass sich keine logische 1:1-Zuordnung zwischen den Positionen des Elektromotors und den Wählpositionen der Schaltanlage ergibt, kann eine zusätzliche Rückmelde-Sensorik erforderlich sein, die das Erreichen der Zielposition signalisiert.

Durch die erfindungsgemäße Lösung wird der Vorteil erzielt, dass eine aufwändige Lageregelung nicht mehr erforderlich ist, da der Elektromotor nach jedem Schritt eine präzise Nulllage einnimmt.

Durch die Verwendung eines geschalteten Reluktanzmotors wird zudem ein einfacher und robuster Aufbau ermöglicht. Des weiteren kann ein Reluktanzmotor in vorteilhafter Weise im Gegensatz zu anderen Motortechnologien (z.B. Bürstenmotoren) ohne weitere Dichtungsmaßnahmen im Getriebeöl betrieben werden.

Der Betrieb des Motors als Positionierantrieb unter Öl hat den weiteren Vorteil, dass das Einschwingverhalten in die Zielposition durch die viskose Dämpfung durch das Öl positiv beeinflußt wird. Durch diese Dämpfung wird das Einschwingen des Motors verkürzt, wodurch sich die Betätigungszeit verringert.

Gemäß der Erfindung ist es auch möglich, einen Motor mit definierter Schrittweite in Verbindung mit einer geeigneten geometrischen Ausgestaltung in anderen Gebieten der Automobiltechnik einzusetzen, um eine elektromotorische Drehbewegung in eine definierte translatorische Bewegung umzuwandeln.

Bezugszeichen

1   geschalteter Reluktanzmotor

2   Stator

3   Pol

4   Rotor

5   Zahn

**Patentansprüche**

1. Wählantrieb für automatisierte Schaltgetriebe von Kraftfahrzeugen, umfassend einen Elektromotor, dessen Drehbewegung mittels einer mechanischen Übertragungskette an die Schaltanlage zum Auswählen einer Wählposition übertragbar ist, wobei der Elektromotor (1) ein Elektromotor mit definierter Schrittweite ist, wobei durch festgelegte geometrische Bedingungen bzw. Abstände zwischen den Wählpositionen in der Schaltanlage die notwendige Schrittzahl zum Wählen einer bestimmten Wählposition nach Maßgabe des Einzelschrittwinkels des Elektromotors und des Abstandes zwischen den Wählpositionen bestimmbar ist, **dadurch gekennzeichnet, dass** als Elektromotor (1) ein in Getriebeöl betriebener geschalteter Reluktanzmotor vorgesehen ist.

2. Wählantrieb für automatisierte Schaltgetriebe von Kraftfahrzeugen nach Anspruch 1, **dadurch gekennzeichnet, dass** die Abstände zwischen den Wählpositionen in der Schaltanlage derart gestaltet sind, dass diese durch einen größten gemeinsamen Teiler (ggT ≥ 1) geteilt werden können, wobei die zum Wählen einer Wählposition erforderliche Anzahl von Schritten des Elektromotors ein ganzzahliges Vielfaches des größten gemeinsamen Teilers ist.

3. Wählantrieb für automatisierte Schaltgetriebe von Kraftfahrzeugen nach Anspruch 1 oder 2, **dadurch gekennzeichnet, dass** die Wählpositionen in der Schaltanlage äquidistant angeordnet sind und dass eine 1:1 Zuordnung von Positionen des Elektromotors (1) und Wählpositionen in der Schaltanlage vorgesehen ist.

4. Wählantrieb für automatisierte Schaltgetriebe von Kraftfahrzeugen nach einem der vorangehenden Ansprüche, **dadurch gekennzeichnet, dass** Signale, enthaltend die eigene Position des Elektromotors (1) vom Elektromotor an eine Sensorik bzw. Steuerung, ohne zusätzliche Sensoren übermittelbar sind.

5. Wählantrieb für automatisierte Schaltgetriebe von Kraftfahrzeugen nach einem der vorangehenden Ansprüche, **dadurch gekennzeichnet, dass** zur Lagebestimmung der Stromanstieg oder Stromabfall in der Zielspule verwendbar ist, wobei der Strom eine vorgegebene Zeit nach dem Abschalten der treibenden Spannungsquelle gemessen und mit einem der Zielposition entsprechenden Wert verglichen wird, um festzustellen, ob sich der Rotor in der erwarteten Zielposition befindet.

6. Wählantrieb für automatisierte Schaltgetriebe von Kraftfahrzeugen nach Anspruch 5, **dadurch gekennzeichnet, dass** der der Zielposition entsprechende Wert für den Strom in Abhängigkeit von der Temperatur des Elektromotors bestimmbar ist.

7. Verfahren zum Wählen einer Wählposition in der Schaltanlage eines automatisierten Schaltgetriebes eines Kraftfahrzeugs, wobei zum Wählen eine elektromotorische Drehbewegung erzeugt wird, die in festen, physikalisch definierten und genau reproduzierbaren Schritten erfolgt und mittels einer mechanischen Übertragungskette an die Schaltanlage zum Auswählen einer Wählposition übertragen wird, und wobei durch festgelegte geometrische Bedingungen bzw. Abstände zwischen den Wählpositionen in der Schaltanlage die notwendige Schrittzahl zum Wählen einer bestimmten Wählposition nach Maßgabe des Einzelschrittwinkels des Elektromotors (1) und des Abstandes zwischen den Wählpositionen bestimmt wird, **dadurch gekennzeichnet, dass** als Elektromotor (1) ein geschalteter Reluktanzmotor verwendet wird, welcher in Getriebeöl betrieben wird.

**8.** Verfahren zum Wählen einer Wählposition in der Schaltanlage eines automatisierten Schaltgetriebes nach Anspruch 7, **dadurch gekennzeichnet, dass** die Abstände zwischen den Wählpositionen in der Schaltanlage derart gestaltet werden, dass diese durch einen größten gemeinsamen Teiler (ggT $\geq$ 1) geteilt werden können, wobei die zum Wählen einer Wählposition erforderliche Anzahl von Schritten des Elektromotors ein ganzzahliges Vielfaches des größten gemeinsamen Teilers ist.

**9.** Verfahren zum Wählen einer Wählposition in der Schaltanlage eines automatisierten Schaltgetriebes nach Anspruch 8, **dadurch gekennzeichnet, dass** die Wählpositionen in der Schaltanlage derart angeordnet sind, dass sich eine äquidistante Anordnung ergibt, derart, dass eine 1:1 Zuordnung von Positionen des Elektromotors (1) und Wählpositionen in der Schaltanlage erzielt wird.

**10.** Verfahren zum Wählen einer Wählposition in der Schaltanlage eines automatisierten Schaltgetriebes nach einem der Ansprüche 7 bis 9, **dadurch gekennzeichnet, dass** Elektromotoren eingesetzt werden, welche die eigene Position ohne weiteren Aufwand an eine Sensorik bzw. Steuerung zurückmelden, so dass der konstruktive Aufwand weiter reduziert wird.

**11.** Verfahren zum Wählen einer Wählposition in der Schaltanlage eines automatisierten Schaltgetriebes nach einem der vorangehenden Ansprüche 7 bis 10, **dadurch gekennzeichnet, dass** zur Lagebestimmung des Elektromotors der Stromanstieg oder Stromabfall in der Zielspule eine vorgegebene Zeit nach dem Abschalten der treibenden Spannungsquelle im Freilaufkreis gemessen und mit einem vorher bestimmten erwarteten Wert verglichen wird, wobei, wenn der erwartete Wert erreicht ist, die Zielposition erreicht ist.

**12.** Verfahren zum Wählen einer Wählposition in der Schaltanlage eines automatisierten Schaltgetriebes nach einem der vorangehenden Ansprüche 7 bis 11, **dadurch gekennzeichnet, dass** die Temperatur des Elektromotors über die Messung des Widerstands seiner Spule bestimmt wird.

**Claims**

**1.** Selector drive for automatic gearboxes of motor vehicles, comprising an electric motor, the rotary movement of which can be transmitted by means of a mechanical transmission chain to the shift system in order to select a selector position, wherein the electric motor (1) is an electric motor with a defined step size, wherein it is possible, as a result of defined geometric conditions or spacings between the selector positions in the shift system, for the necessary number of steps for selecting a certain selector position to be determined on the basis of the individual step angle of the electric motor and the spacing between the selector positions, **characterized in that** a switched reluctance motor operated in gearbox oil is provided as an electric motor (1).

**2.** Selector drive for automatic gearboxes of motor vehicles according to Claim 1, **characterized in that** the spacings between the selector positions in the shift system are such that they can be divided by a highest common denominator (ggT $\geq$ 1), wherein the number of steps of the electric motor required for selecting a selector position is an integer multiple of the highest common denominator.

**3.** Selector drive for automatic gearboxes of motor vehicles according to Claim 1 or 2, **characterized in that** the selector positions in the shift system are arranged equidistantly, and **in that** a 1:1 assignment of positions of the electric motor (1) and selector positions in the shift system is provided.

**4.** Selector drive for automatic gearboxes of motor vehicles according to one of the preceding claims, **characterized in that** signals containing the own position of the electric motor (1) can be transmitted, without additional sensors, from the electric motor to a sensor arrangement or controller.

**5.** Selector drive for automatic gearboxes of motor vehicles according to one of the preceding claims, **characterized in that** the increase or decrease in current in the target coil can be used for position determination, wherein the current is measured a predefined time after the deactivation of the driving voltage source, and is compared with a value corresponding to the target position, in order to establish whether the rotor is situated in the expected target position.

**6.** Selector drive for automatic gearboxes of motor vehicles according to Claim 5, **characterized in that** that value for the current which corresponds to the target position can be determined as a function of the temperature of the electric motor.

**7.** Method for selecting a selector position in the shift system of an automatic gearbox of a motor vehicle, wherein for selecting, a rotary movement is generated by electric motor, which rotary movement takes place in fixed, physically defined and precisely reproducible steps and is transmitted by means of a mechanical transmission chain to the shift system in order to select a selector position, and wherein, as a result of defined geometric conditions or spacings between the selector positions in the shift system, the necessary number of steps for selecting a certain selector position is determined on the basis of the individual step angle of the electric motor (1) and the spacing between the selector positions, **characterized in that** a switched reluctance motor which is operated in transmission oil is used as an electric motor (1).

8. Method for selecting a selector position in the shift system of an automatic gearbox according to Claim 7, **characterized in that** the spacings between the selector positions in the shift system are such that they can be divided by a highest common denominator ($ggT \geq 1$), wherein the number of steps of the electric motor required for selecting a selector position is an integer multiple of the highest common denominator.

9. Method for selecting a selector position in the shift system of an automatic gearbox according to Claim 8, **characterized in that** the selector positions in the shift system are arranged so as to yield an equidistant arrangement, in such a way that a 1:1 assignment of positions of the electric motor (1) and selector positions in the shift system is obtained.

10. Method for selecting a selector position in the shift system of an automatic gearbox according to one of Claims 7 to 9, **characterized in that** electric motors are used which transmit their own position to a sensor arrangement or controller without further expenditure, such that the design expenditure is further reduced.

11. Method for selecting a selector position in the shift system of an automatic gearbox according to one of the preceding Claims 7 to 10, **characterized in that**, for position determination of the electric motor, the increase or decrease in current in the target coil is measured a predefined time after the deactivation of the driving voltage source in the freewheeling circuit, and is compared with a predetermined expected value, wherein the target position has been reached when the expected value is attained.

12. Method for selecting a selector position in the shift system of an automatic gearbox according to one of the preceding Claims 7 to 11, **characterized in that** the temperature of the electric motor is determined by measuring the resistance of its coil.

## Revendications

1. Entraînement de sélection pour des boîtes de vitesses automatisées de véhicules automobiles, comprenant un moteur électrique, dont le mouvement de rotation peut être transmis au moyen d'une chaîne de transmission mécanique à l'installation de changement de vitesse pour sélectionner une position de sélection, le moteur électrique (1) étant un moteur électrique avec une largeur de pas définie, le nombre de pas nécessaire pour la sélection d'une position de sélection déterminée pouvant être déterminé en fonction de l'angle de pas individuel du moteur électrique et de la distance entre les positions de sélection par des conditions géométriques ou des distances fixées entre les positions de sélection dans l'installation de changement de vitesse, **caractérisé en ce que** l'on prévoit comme moteur électrique (1) un moteur à réluctance monté en circuit entraîné dans une huile de transmission.

2. Entraînement de sélection pour des boîtes de vitesses automatisées de véhicules automobiles selon la revendication 1, **caractérisé en ce que** les distances entre les positions de sélection dans l'installation de changement de vitesse sont configurées de telle sorte que celles-ci puissent être divisées par un plus grand diviseur commun ($ggT \geq 1$), le nombre de pas du moteur électrique nécessaire pour sélectionner une position de sélection étant un multiple entier du plus grand diviseur commun.

3. Entraînement de sélection pour des boîtes de vitesses automatisées de véhicules automobiles selon la revendication 1 ou 2, **caractérisé en ce que** les positions de sélection dans l'installation de changement de vitesse sont disposées de manière équidistante et **en ce qu'**il est prévu une affectation de rapport 1:1 entre les positions du moteur électrique (1) et les positions de sélection dans l'installation de changement de vitesse.

4. Entraînement de sélection pour des boîtes de vitesses automatisées de véhicules automobiles selon l'une quelconque des revendications précédentes, **caractérisé en ce que** des signaux contenant la position propre du moteur électrique (1) peuvent être communiqués depuis le moteur électrique à un système de détection ou à une commande, sans capteurs supplémentaires.

5. Entraînement de sélection pour des boîtes de vitesses automatisées de véhicules automobiles selon l'une quelconque des revendications précédentes, **caractérisé en ce que**, pour déterminer la position, on peut utiliser l'augmentation de courant ou la diminution de courant dans la bobine cible, le courant étant mesuré pendant un temps prédéfini après la coupure de la source de tension d'entraînement et étant comparé à une valeur correspondant à la position cible, afin d'établir si le rotor se trouve dans la position cible attendue.

**6.** Entraînement de sélection pour des boîtes de vitesses automatisées de véhicules automobiles selon la revendication 5, **caractérisé en ce que** la valeur correspondant à la position cible pour le courant peut être déterminée en fonction de la température du moteur électrique.

**7.** Procédé pour sélectionner une position de sélection dans l'installation de changement de vitesse d'une boîte de vitesses automatisée d'un véhicule automobile, dans lequel, pour la sélection, un mouvement de rotation du moteur électrique est produit, lequel a lieu par pas fixes, définis physiquement et exactement reproductibles, et est transmis au moyen d'une chaîne de transmission mécanique à l'installation de changement de vitesse pour sélectionner une position de sélection, et dans lequel le nombre de pas nécessaire pour la sélection d'une position de sélection déterminée est déterminé en fonction de l'angle de pas individuel du moteur électrique (1) et de la distance entre les positions de sélection par des conditions géométriques ou des distances fixées entre les positions de sélection dans l'installation de changement de vitesse, **caractérisé en ce que** l'on utilise comme moteur électrique (1) un moteur à réluctance monté en circuit, qui est entraîné dans une huile de transmission.

**8.** Procédé pour sélectionner une position de sélection dans l'installation de changement de vitesse d'une boîte de vitesses automatisée selon la revendication 7, **caractérisé en ce que** les distances entre les positions de sélection dans l'installation de changement de vitesse sont configurées de telle sorte qu'elles puissent être divisées par un plus grand diviseur commun (ggT $\geq$ 1), le nombre de pas du moteur électrique nécessaire pour sélectionner une position de sélection étant un multiple entier du plus grand diviseur commun.

**9.** Procédé pour sélectionner une position de sélection dans l'installation de changement de vitesse d'une boîte de vitesses automatisée selon la revendication 8, **caractérisé en ce que** les positions de sélection dans l'installation de changement de vitesse sont disposées de telle sorte que l'on obtienne un agencement équidistant, de telle sorte que l'on obtienne une affectation de rapport 1:1 entre les positions du moteur électrique (1) et les positions de sélection dans l'installation de changement de vitesse.

**10.** Procédé pour sélectionner une position de sélection dans l'installation de changement de vitesse d'une boîte de vitesses automatisée selon l'une quelconque des revendications 7 à 9, **caractérisé en ce que** l'on utilise des moteurs électriques qui communiquent en retour la position propre sans autre intervention sur un système de détection ou une commande, de sorte que l'effort de construction est encore réduit.

**11.** Procédé pour sélectionner une position de sélection dans l'installation de changement de vitesse d'une boîte de vitesses automatisée selon l'une quelconque des revendications précédentes 7 à 10, **caractérisé en ce que**, pour déterminer la position du moteur électrique, l'augmentation de courant ou la chute de courant dans la bobine cible est mesurée pendant un temps prédéfini après la coupure de la source de tension d'entraînement en circuit de roue libre, et est comparée à une valeur attendue déterminée préalablement, la position cible étant atteinte lorsque la valeur attendue est atteinte.

**12.** Procédé pour sélectionner une position de sélection dans l'installation de changement de vitesse d'une boîte de vitesses automatisée selon l'une quelconque des revendications précédentes 7 à 11, **caractérisé en ce que** la température du moteur électrique est déterminée par le biais de la mesure de la résistance de sa bobine.

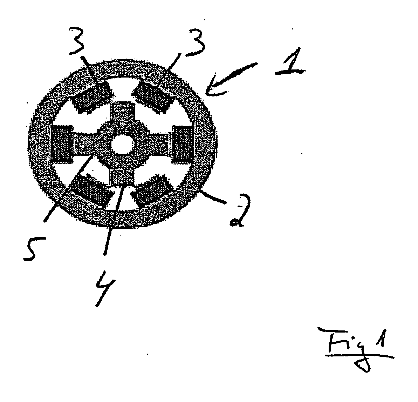

Fig 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4230326 A1
- EP 864782 A